# EUROPEAN PATENT SPECIFICATION

(11) **EP 2 021 281 B1**
(45) Date of publication and mention of the grant of the patent: **20.07.2011**
(21) Application number: 07730611.6
(22) Date of filing: 24.05.2007
(51) Int. Cl.: C01B 33/14, C04B 14/04, C04B 28/24

(54) **PROCESS FOR PRODUCING AN ACID SILICATE SOLUTION**
VERFAHREN ZUR HERSTELLUNG EINER SAUREN SILIKATLÖSUNG
PROCÉDÉ DE PRODUCTION D'UNE SOLUTION ACIDE DE SILICATE

(30) Priority: 24.05.2006 FI 20060514
(43) Date of publication of application: 11.02.2009
(73) Proprietor: Kemira Oyj, 00180 Helsinki (FI)
(72) Inventor: SAARI, Kari, FI-01600 Vantaa (FI); TIMONEN, Riikka, FI-02130 Espoo (FI); KERÄLÄ, Jori, FI-90540 Oulu (FI); PEKONEN, Pentti, FI-90540 Oulu (FI); HUKKANEN, Pentti, FI-90650 Oulu (FI); KOSKINEN, Heli, FI-00100 Helsinki (FI); VUORI, Antti, FI-00160 Helsinki (FI)
(74) Representative: Sundman, Patrik Christoffer
(86) International application number: PCT/FI2007/000142
(87) International publication number: WO 2007/135229

(56) References cited:
- EP-A1- 0 483 774
- WO-A-01/97963
- WO-A-99/52979
- JP-A- 8 196 811
- JP-A- 2004 277 615
- US-A1- 2007 087 157

## Description

### Background of the Invention

### Field of the Invention

The present invention relates to the production of acid silicate solutions. In particular, the present invention concerns a novel and improved method of producing acid silicate solutions from a raw-material comprising amorphous silica.

### Background of the Invention

The production by sol-gel technology of inorganic binders based on silicate solutions/ dispersions for mineral wool is discussed in a number of articles and patents. The particular advantage of such binder materials is that they are environmentally friendly and do not pose the same potential health hazards during production as conventional phenol formaldehyde resins. Furthermore, silicate based inorganic binders provide fire resistant insulation products, whereas phenol formaldehyde binders loose their strength already at temperatures above 250 °C, if the products are kept at such temperatures for extended periods of time.

Sol-gel silicate binders can be produced from silica raw-materials by dissolution in organic acids, such as formic acid. The silicate solution thus obtained is a colloidal silicon suspension containing silicate particles having an average particle size of about 10 to 100 nm. The binding mechanism of sol-gel silicate binders is based on the formation of a silicon oxide network, which further may contain salts formed by the acid and cations emanating from the silica raw-material.

Conventionally, sol-gel binders are produced by batch processes and the obtained solutions/suspensions are then stabilized and stored until they can be used in a mineral wool process.

WO01/97963 discloses a process, for preparing an aqueous silicate dispersion and a silicate containing sol, consisting of (page 2, lines 15-30, page 4, lines 19-35):
- dispersing a silica material in an acid aqueous solution to produce a silica-containing suspension having a dry solids content of 5 to 60 %
- dissolving the silica with the acid in the suspension to form a silicate solution.

Wherein the aqueous solution is an acidic solution, such as an aqueous solution made acidic by adding an organic acid, such as formic, acetic, propionic acid. The pH of the solution is adjusted suitably. A low pH value results in a rapid dissolution of the mineral material to form a gel, the gelling time being dependent on the pH, a lower pH resulting in a more rapid gelling than a higher pH. Good dissolution and rapid gelling for a wide range of mineral materials is obtained at a pH of 0 to 6.

### Summary of the Invention

It is an aim of the present invention to provide a novel process for producing acid silicate solutions which can be used as sol-gel binders. In particular, it is an aim of the invention to provide a technical solution which reduces production times of binder compositions and allows for continuous processing.

The present invention is based on the idea that the production of a sol-gel silicate solution is carried out in a reaction cascade comprising at least reaction zones, wherein a raw-material comprising amorphous silica is first mixed with an organic acid in a first step to produce a suspension having a high dry solids content, and then the silica is reacted with the organic acid, essentially without any further addition of acid or liquid, in a second step to produce a silicate solution which is recovered.

Thus, in practice, mineral fibre is mixed with an aqueous solution of at least one organic acid, such as formic acid, in a first reactor, the mixture is agitated to form a homogeneous suspension which is then transferred to a second reactor where dissolution is continued until the pH of the suspension has risen sufficiently to indicate that the silica raw-material has been at least partially suspended into the liquid phase to form a stable or metastable solution comprising dispersed nano-size particles.

More specifically, the present invention is characterized by what is stated in the characterizing part of claim 1.

Considerable advantages are obtained with the present invention. Since the reaction is carried out in an aqueous medium, by performing the suspension step at high dry matter content, the volume of water incorporated into the ready silicate solution and that needs to be evaporated during the use of the solution can be greatly reduced. The production process can be integrated into the production line of mineral wool while providing silicate binder on demand. Even if the dry solids content is high, the present compositions can be stored for hours or days, should that be desired, without gelling and without use of stabilizing agents.

Next, the invention will be described more closely with the aid of a detailed description.

### Brief Description of the Drawing

Figure 1 depicts in a schematic fashion the flow sheet of a process according to one embodiment of the present invention.

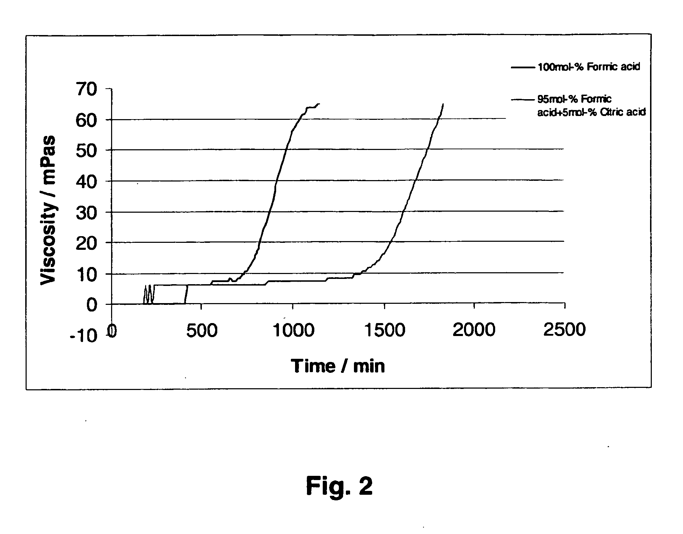

Figure 2 shows comparison of gel times between sol-gels containing 100 mol-% of formic acid and 95 mol-% with 5 mol-% citric acid, respectively.

### Description of Preferred Embodiments

The present invention provides a process for producing an acid silicate solution from an amorphous silica raw-material by dissolving the silica raw-material in an organic acid. Thus, the basic starting materials of the process are the silica raw-material and the acid.

Within the context of the present invention, the expression "amorphous silica raw-material" is used for denoting a starting material, which contains a mixture of inorganic oxides, primarily silica, alumina and oxides of alkaline metals, earth alkaline metals and transition metals. The raw-material is preferably of a kind which is suitable for the preparation of an acidic silicate composition capable of gelling within a predetermined time range of about 0.1 h to 14 days, in particular about 1 h to 96 hours of the end of the production process.

The amorphous silica raw-material can be generally of any form; a fibrous, granular or particulate silica material is suitable. The silicon dioxide content in the raw-material is typically at least 10 % by weight, in particular about 20 to 60 % by weight, and the raw-material usually contains also aluminium oxide (e.g. about 2 to 40 % by weight) and earth alkaline metal oxides (e.g. totally about 10 to 70 % by weight) along with other metal oxides, such as alkali metal oxides and metal oxides or transition metal oxides, each in concentrations from about 0.01 to 20 % by weight, e.g. alkali metal oxides 0.05 to 10 % by weight and transition metal oxides about 0.1 to 15 % by weight.

Preferably, a fibrous material is used rather than a particulate material, although the fibrous material may contain a portion of amorphous or crystalline beads of silica or a silicate material. Further, the raw-material is preferably a "glassy" (i.e. amorphous) silica, which kind of material is generally formed when a raw-material comprised of mineral is molten and formed into fibres at high temperatures. The production of mineral wool is an example of a process of the indicated kind which produces glass silica. Therefore, mineral wool and mineral fibres are particularly suitable raw-materials for the present invention.

The silica-containing raw material can be selected from the group of wastes and products of a process for producing mineral wool or mineral fibre products, spinning waste of such a process, unused fibres and unused wool, and recycled mineral wool and fibre products.

If needed, the raw-material can be pretreated, for example by mechanical crushing or refining before suspension and dissolution.

To mention one suitable example, the raw-material of the present invention can have a chemical composition of
- 35 to 45% SiO₂,
- 8 to 25% Al₂O₃,
- 18 to 55 % of MgO and CaO,
- 0.2 to 5 % of Na₂O and K₂O and
- 2 to 10% of FeO.

The above percentages are calculated from the total dry weight of the material. Naturally, other chemical compositions are also possible depending on the source of the raw-material.

The acid used is an acid, which does not essentially form salts with the earth alkaline metal present in the raw-material that would precipitate into the liquid. Therefore, sulphuric acid is generally not a suitable choice. However, other mineral acids, such as hydrochloric acid, phosphorous acid and nitric acid are, in principle, capable of being used in the present invention. Typically the acid is however an organic acid having one or several acid groups. Mono- or dibasic alkanoic or aromatic acids are preferred. Examples of suitable alkanoic acids include mono-, di- or tricarboxylic acids selected from lower alkane acids containing 1 to 6 carbon atoms in the hydrocarbyl residue and which may contain 1 or more hydroxy groups, such as formic, acetic, propionic, citric, lactic, oxalic, malonic, malic, and tartaric acid. Other organic acids are mono-, di- or tricarboxylic aromatic acids containing 6 to 8 carbon atoms, such benzoic acid, and sulphonic aliphatic and aromatic acids, such as methylsulphonic acid, ethylsulphonic acid, benzoic sulphonic acid, toluene sulphonic acid, dodecylbenzene sulphonic acid, ethylbenzene sulphonic acid and phenol sulphonic acid. Mixtures of two or more of the above listed acids, such as two-component mixtures of formic acid and citric acid, of formic acid and lactic acid, of formic acid and oxalic acid, and three-component mixtures of formic acid and citric acid and lactic acid, can also be used. Generally the acids should be miscible with or soluble in water. It is preferred to add the additional acids to the bulk acid before the acid solution is contacted with the silica raw-material.

When the bulk acid is a monobasic or a dibasic acid, such as formic acid or lactic acid, the concentration thereof typically is about 70 to 100 % and the concentration of any other acid(s) is (are) 0 to about 30 %, the percentages being calculated from the total molar concentration of the acid solution. Particularly preferred concentrations of acid mixtures are: 75 to 98 % of a first acid and 2 to 25 % of a second acid or of a second and third acid together. Naturally, it is possible to use acid mixtures comprising more than even three acids, such as mixtures of four or five acids. Optionally, it is also possible to add minor amounts of mineral acids.

By using di- or tribasic acids as complements to a monobasic bulk acid, it is possible to adjust the gelling times and to reduce potential fume emissions and corrosion caused by the bulk acid. However, as indicated above, it is also possible to use a dibasic acid in concentrations up to 100 mole-% to give prolonged gel times.

The acid solution may contain further components which are capable of adjusting the gel time of the silica suspension. Generally, the concentration of such components is about 0.05 to 5 %, in particular about 0.1 to 3.5 %, based on the molar concentration of the acid solution.

As indicated above, a particularly preferred acid, for forming the bulk of the acid solution, is formic acid, which is used at a concentration of about 1.0 to 8.0 mol/kg, in particular about 2.0 to 5.9 mol/kg (calculated from the weight of the liquid). Typically, the formic acid is available as an azeotropic aqueous solution containing 85 wt-% formic acid.

The weight ratio between the silica raw-material and the acid is about 1:10 to 10:1, depending on the chemical composition of the silica and the acid. Typically there is a surplus of the acid, and the weight ratio is about 1:1.05 to 1:5, in particular about 1:1.5 to 1:3 between the silica raw material and the acid.

In the process according to the present invention, the silica raw-material is suspended in the acid liquid to produce a silica-containing suspension having a dry solids content of at least 10 %, calculated from the weight of the liquid, and then the silica is dissolved in and reacted with the acid in the suspension to produce a silicate solution having a silicon content of at least 0.1 % by weight. The total reaction time is generally less than 10 hours, typically less than 6 hours, preferably not more than 4 hours.

According to the present invention, the term "dry solids matter" refers to the solid residue of heating carried out at a temperature above the boiling temperature of water during a time period sufficient for evaporating all of the water. One typical method of determining the dry solids content comprises placing a sample of the solution or suspension into an oven, keeping the sample at 110°C for 2 hours, and weighing the residue.

If needed, inorganic additives can be further added to the composition in amounts sufficient to give concentrations of about 0.01 to 5 % by weight of the fibres.

With the aid of the present process it is possible to produce silicate solutions having high dry solids contents of 10 wt-% or more, in particular 12 to 22 wt-%. The pH of the solution is 7 at the most, preferably less than 7, and at least 1.5, preferably in excess of 1.5, typically about 2.5 ± 1.0, in particular 2.0 to 3.0. By adjusting the pH to a value in the range of 2.5 ± 1.0 it is possible to produce a solution which can be characterized as being "metastable" which in the present context means that the solution is capable of being stored as such without gelling for reasonably long periods of time ranging typically, but not exclusively, from about 1 hour to 24 hours, depending on temperature, while it can be chemically or physically activated for rapid gelling at any point during that time period.

Typically, the gel time of the silicate solution is at least 700 minutes, preferably at least 800 minutes, in particular about 850 to 4000 minutes, at 20 °C.

For the sake of completeness it should be pointed out that it is possible to carry out the invention, i.e. to manufacture the present silicate solutions, also in close vicinity of its use, and in particular when operating the manufacturing process in a continuous mode, gel times even shorter than those indicated above can be employed or even be advantageous. Thus, the gel time can be about 120 to 700 minutes, in particular about 150 to 360 minutes or even 150 to 200 minutes at 20 °C.

Of the chemical measures, which will activate the solution for gelling, addition of a chemical agent, concentration of the solution, and increase of the pH can be mentioned. The physical steps include an increase of the temperature. Naturally, any combinations of chemical and physical steps are possible.

The acid silicate solution produced will contain silica and alumina in a molar ratio of about 2 to about 12, preferably about 2.5 to 8, and in particular about 3.5 to 6.

As mentioned above, the whole process from the suspension step to the reaction and dissolution step is carried out at high dry matter content. It is not necessary to dissolve all silicon raw material, generally it is sufficient if the solution contains about 0.1 to 5 %, in particular about 0.2 to 2 %, by weight silicon. Some 50 to 95 % of the solid raw-material is usually being dissolved.

According to one embodiment, the progress of the reaction is indicated by the pH of the reaction mixture. In the beginning the pH essentially corresponds to that of the acid used and it will rise when the reaction consumes acid. For formic acid at the concentration present below, the pH will be about 1, such as about 1.1. Typically, the reaction can be interrupted with the pH has risen by about 1 pH-unit (in particular in the case of formic acid) to a value in the range of 2.0 to 3.0 to avoid formation of colloidal silica products.

Batch operation of the process is possible but according to a particularly preferred embodiment, the first and the second steps of the process are continuously operated. In practice, this leads to a continuous manufacturing process for on-site production of an acid silicate solution, which can be fed directly into a further processing step comprising, for example, the production of mineral wool, such as rock wool or glass wool. Particular advantages are obtained by combining a high dry matter content with continuous operation and production of a silicate solution which is capable of storing in stable or even metastable condition - the process can be combined with and placed upstream of a process which uses the silicate, such as a mineral wool process. By adapting the capacity of the silicate process to that of the following process, the need for intermediate storage of the silicate solution can be reduced or even removed. Further, since this means that the dry matter content can be increased, the capacity of any evaporators or ovens (evaporating water) placed downstream of the present process can be effectively reduced.

The need for conventional stabilizing agents, such as surfactants and polymers is also diminished. However, such components, exemplified by polyethylene oxide, polyethylene glycol and nonylphenols can, if desired, be used in conventional amounts of about 0.1 to 5 %, in particular 0.2 to 3.0 %, by weight of the total solids of the solution.

Next, the process will be examined in more detail with reference to the attached drawing which shows the configuration of a continuously operated process.

As will appear, the first step (which also can be designating "premixing step") is carried out in a first stirred vessel, such as a tank 1 provided with an agitator or rotor/stator system 2. The tank is further equipped with a continuously operated outlet 3 for withdrawal of the silica-containing suspension. For feeding the tank, there is a feed hopper 4 and a conveyor belt 5 for stone wool and a metering pump 6 for formic acid. Further, there is a feed nozzle for raw water 7 and for additives 8. Mixed together, the wool, the formic acid and water, optionally together with the additives, form a suspension that defines an upper surface within the vessel (cf. dash line). Usually the vessel is filled up to a level of about 50 - 85 % of the height of the tank, measured from the bottom thereof. For monitoring the height of the surface level, the tank is equipped with conventional level control instrumentation, which is operatively connected to feeding means 4 to 8.

The mixed suspension is withdrawn from the tank via the outlet 3 after a predetermined residence time, generally not exceeding 1 to 30 minutes. For the continuous operation mode, the withdrawal rate is adapted to the feed rate of the raw-materials such that the desired and residence time is maintained and the level of the upper surface is maintained at a predetermined height within the vessel 1.

The reaction between the acid and the silica components of the raw-material is an exothermic reaction which releases heat. In order to achieve isothermal operation, tank 1 can be provided with cooling means to keep the temperature at a desired value of 15 to 30 °C. It is also possible to carry out the suspending step at adiabatic conditions, in which case the reaction heat may lead to an increase of the temperature of the suspension with about 10 to 30 degrees. Thus, depending on the temperature of the feed and the isothermal/ adiabatic operation mode, the first step is typically carried out at a temperature of 20 to 50 °C.

From tank 1, which functions as a suspension mixer, the essentially homogeneous silica suspension is conducted with a pump 11 via a grinder unit 12 to the dissolution reactor zone 13-17. As shown in the drawing, this reaction zone can be divided into two separate reactor units 13 and 16 arranged in a cascade. It is equally possible to operate the process with merely one reactor also. In the embodiment shown in the drawing, both reactors 13 and 16 of the cascade comprise a tank with a dynamic mixer 13', 16' and the tank is equipped with continuously operated outlets 14 and 17. From the first tank, the withdrawn suspension/solution can be divided into a first stream, which is recycled via the grinder unit 12 to the reactor 13, and a second stream which is forwarded to the second reactor 16. Both reactors can be equipped with cooling means for achieving isothermal operation at a temperature in the range of, e.g. 15 to 30 °C, although adiabatic operation is possible also. The residence time in the dissolution reactor zone is in total about 10 to 220 minutes, in particular about 15 to 180 minutes and preferably about 20 to 90 minutes.

Both of the stirred vessels are operated in a similar fashion as tank 1. The suspension defines an upper surface within the vessel (cf. dash lines), the level of the surface is monitored as known per se and the withdrawal of the silicate solution is carried out in such a way that the level of the upper surface is maintained at a predetermined height within the vessel (for example 50 to 85 % of the height).

In grinder unit 12 mentioned above the solid particles of the suspension are comminuted so as to produce new reaction surfaces of the silica raw-material.

From the stirred tank reactor 16, the product of the process, an acid silicate solution, is withdrawn after the predetermined residence time via outlet 17 and conducted to a filtering unit 18 for separating unreacted solid matter from the liquid phase. Any conventional type of filter can be used, such as a vertical plate pressure filter.

In the above description, reference has been made to the residence time being "predetermined". In this connection, it should be pointed out that the residence time can be predetermined and based on previous experiences, if the process is operated basically using raw-materials of consistent quality. If the composition of the silica raw-material or the concentration of the acid changes, the residence time in the process may need to be adjusted. One conventional way of monitoring the progress of the reaction is to measure pH of the liquid phase of the process. In that case, the reaction can be interrupted when pH of the silicate solution has reached a value in the range of 2.0 to 3.0.

The product from reactor 16 is gathered in a product tank 19. The product tank can be connected to a supply of water for dilution or a feed nozzle for additives by which the stable/metastable solution gathered in the tank can be activated before it is fed to further processing, e.g. in a insulating mineral wool process. The undissolved solids separated in the filter unit can be recovered and recycled by combining with the silica raw-material.

Typically, the filtrate recovered from the filtration is cooled to a storage temperature in the range of -10 to 15 °C.

In a process according to the present process, which can be carried out as explained above in connection with the drawing, in the first step a suspension is produced having a solids content in excess of 10, typically about 12 to 22 %, said solids content being calculated from the weight of the liquid and, in the second step, the reaction between the suspended amorphous silica of the raw-material with the acid is continued until a metastable silicate solution having a silicon content of about 1.1 to 2 %, by weight of the solution, is obtained. In the first step, the mixing gives an essentially homogeneous suspension, which means that the silica is evenly distributed throughout the liquid phase.

The product is a sol-gel which stands for a stable or metastable particle dispersion in a solution. The silicate is present typically in the form of minute particles having a particle size in the range of 1 to 1000 nm, preferably about 10 to 100 nm.

The pH of the product is generally 1.5 to 7.0, a narrow range of 2.3 ± 1.0, in particular 2.0 to 3.0, being particularly preferred.

As discussed above, the gelling time of the silicate solution can be adjusting by the steps of adding a chemical, diluting the solution, adjusting the pH, or increasing the temperature of the solution, or by a combination of two or more of these steps. As specific examples of chemicals ammonium hydroxide and hydrogen peroxide can be mentioned. According to the invention, 0.1 to 2 parts by weight of aqueous ammonium hydroxide or aqueous hydrogen peroxide can be added for 100 parts by weight of the solution. Ammonation will promote film formation properties of the solution, whereas the hydrogen peroxide will influence the colour of the solution. Ammonium hydroxide will also increase the pH to above 3.0, for example about 3.1 to 4.0, which already as such promotes gelling. Other alkaline compounds can also be employed for that purpose. Dilution of the solution with water will have some effect on gelling initiation, as will increase of temperature with 10 to 50 °C (depending on the storage temperature of the solution).

The following non-limiting examples illustrate the invention:

### Example 1

Five sol-gel solutions were prepared in a batch reactor at high dry solids concentrations. The temperature was maintained at about 20 °C during the whole process.

The compositions of the raw-materials and the solutions are indicated in Table 1:

**Table 1**

| Sample | 1 | 2 | 3 | 4 | 5 |
|---|---|---|---|---|---|
| Fibre (g) | 120 | 120 | 120 | 120 | 120 |
| HCOOH (g) | 270.6 | 230.6 | 220 | 210 | 207.5 |
| Water (g) | 826.3 | 866.3 | 876.3 | 886.3 | 866.3 |
| Inorganic additive (g) | 2.4 | 2.4 | 2.4 | 2.4 | 2.4 |
| Total (g) | 1216.9 | 1216.9 | 1216.3 | 1216.3 | 1193.8 |
| Amount of formic acid (mol/kg) | 4.56 | 3.88 | 3.71 | 3.54 | 3.57 |
| Fiber in batch (%) | 9.9 | 9.9 | 9.9 | 9.9 | 10.1 |
| Dissolved proportion of wool (%) | 8.39 | 8.26 | 8.16 | 7.91 | 8.16 |
| Filtrate (g) | 1148.5 | 1143.6 | 1149.4 | 1125.8 | 113.0 |
| Proportion of undissolved wool (%) | 16.25 | 17.7 | 18.8 | 21.5 | 20.5 |
| | | | | | |
| pH | 2.8 | 2.9 | 3.0 | 3.0 | 3.05 |
| Viscosity (cP) | 22.4 | 18.5 | 18.5 | 18 | 16.9 |
| Density (g/cm³) | 1.1379 | | | | 1.1196 |
| Dry matter (%) | 18.9 | 18.3 | 18.1 | 17.2 | 18.2 |
| | | | | | |
| Gelling time 10-12°C (h) | 24 | 16 | 16 | 16 | 10 |

### Example 2

In a process as described above, an acid silicate solution was prepared from a mixture of 3.9 mol/kg HCOOH and 9.9 wt-% mineral wool fibres and 2 % inorganic additive from the amount of the fibres. The total dissolution time was 4 hours and the inorganic additive was added after 2 hours. The product recovered was cooled to 10 °C and stored.

The first vessel was not equipped with cooling.

During the process, the dry matter concentration increased to 14 wt % after about 30 minutes and 16 wt % after about 165 minutes. The density of the solution increased to about 1.12 g/cm³ after 165 minutes. During the mixing step (first 15 minutes) the temperature increased with about 10 degrees from 17°C to 27 °C and during the dissolution stage the temperature was maintained at about 20°C for 110 minutes. After 150 minutes the temperature was decreased to the storage temperature of 10°C within about 90 minutes.

### Example 3

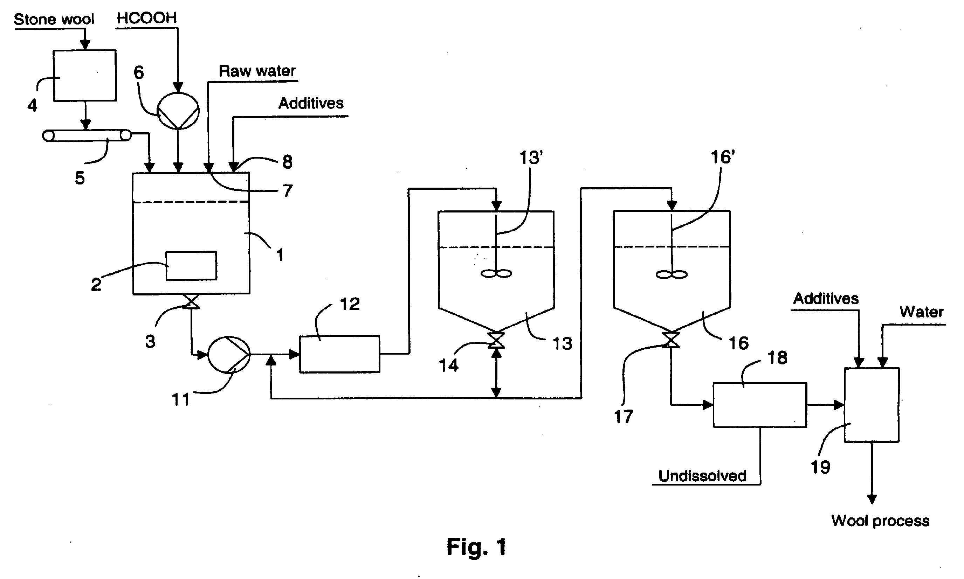

A test based on a continuous operation mode of the process was carried out with a reactor configuration as depicted in Figure 1. The residence times of the different reaction steps were:
Premixing: ~10 min
Reactor 1: 15 min
Reactor 2: 15 min

Formic acid and wool fibres were fed into the premixing reactor: 3.9 mol/kg formic acid at a rate of 1.9-2.0 kg/min and wool fibre at a rate of 0.22 kg/min. The amount of the wool fibre in the suspension varied in the range of 9.9 % to 10.3 % (a corresponding amount of the product was withdrawn from the reactor).

During the test run, two steps were carried out with the premixing temperatures being 27 °C and 40°C, respectively.

After reactor 2, the product was filtered and analysed.

**Table 2.**

| Continuous process carried out at two different temperature ranges/pH and temperature of the different process steps: | | | | |
|---|---|---|---|---|
| | Premixing | Reactor 1 | Reactor 2 | Product |
| Temperature °C | 27 | 30 | 33 | 25 |
| PH | 2.43 | 2.48 | 2.58 | 2.58 |
| Viscosity, cP | | | | 14 |
| Density, g/cm³ | | | | 1.093 |
| | | | | |

| | Premixing | Reactor 1 | Reactor 2 | Product |
|---|---|---|---|---|
| Temperature °C | 40 | 41 | 42 | 30 |
| PH | 2.7 | 2.87 | 2.92 | 2.93 |
| Viscosity, cP | | | | 15.6 |
| Density, g/cm³ | | | | 1.12 |

### Example 4

One sol-gel dissolution with an additional organic acid, here citric acid, was conducted at lab-scale with high solids content and the gel time was compared with that of a dissolution with formic acid only (=100 mol% formic acid). 44.76 g of citric acid (=5 mol-%) was mixed with 866.3 g of water and 219.07 g of formic acid (=95 mol-%) prior to addition of 120 g of the fibrous mineral raw material. The dissolution time was 4 hours after which the sol was filtrated. The viscosity measurement was started immediately after the filtration by a rotational viscometer at shear rate 600 1/s as function of time at room temperature. The gel time was determined to be the point in time when the viscosity value reaches 10 mPas. Here, the dissolution with 95 mol% formic acid and 5 mol% citric acid gave a gel time of 1380 minutes whereas the recipe with 100 mol% formic acid gelates at 740 minutes.

### Example 5

Example 4 was repeated using 100 mol% lactic acid for dissolution of the silica raw-material. A gel time of 2160 minutes was obtained.

## Claims

1. A process for producing an acid silicate solution from an amorphous silica raw-material by dissolving the silica raw-material in at least one organic acid, comprising
- a first step of suspending the silica raw-material in a liquid which contains the acid to produce a silica-containing suspension having a dry solids content of at least 10 %, calculated from the weight of the liquid, and
- a second step of reacting the silica with the acid in the suspension to produce a silicate solution having a silicon content of at least 0.1 % by weight,
wherein a metastable silicate solution is produced having a pH of 2.0 to 3.0.

2. The process according to claim 1, comprising producing a silicate solution having a dry solids content of at least 12 %.

3. The process according to claim 1 or 2, comprising producing a silicate solution having a silicon content of at least 0.5 %, in particular at least 1 %, by weight.

4. The process according to any of claims 1 to 3, wherein the first and the second steps are carried out in a continuous manner.

5. The process according to claim 3, wherein the first step is carried out in a first stirred vessel with a continuously operated outlet for withdrawal of the silica-containing suspension, the suspension defining an upper surface having a level within the vessel, whereby the level of the upper surface is monitored and the withdrawal of the mixed suspension is carried out in such a way that the level of the upper surface is maintained at a predetermined height within the vessel.

6. The process according to any of the preceding claims, comprising producing a silicate solution containing silica and alumina in a molar ratio of about 2 to about 12, preferably 2.5 to 8, in particular 3 to 6.

7. The process according to any of the preceding claims, wherein the raw-material is suspended in mono-, di- or tribasic organic acids, in particular mono-, di- or tricarboxylic acids or hydroxy acids selected from the group of alkanoic acids having 1 to 6 carbon atoms and mono- and dicarboxylic aromatic acids having 6 to 8 carbon atoms, and mixtures thereof.

8. The process according to claim 7, wherein the raw-material is suspended in a mixture formed by formic acid and one or several organic acids selected from the group of lactic acid, oxalic acid, malic acid, malonic acid, tartaric acid and citric acid.

9. The process according to claim 8, wherein a mixture of formic acid and at least one other organic acid is used, the concentration of formic acid being 85 to 98 % and the concentration of the other acid(s) is (are) about 2 to 15 %, the percentages being calculated from the total molar concentration of the acid.

10. The process according to any of the preceding claims, wherein the raw-material is a fibrous material, which comprises oxides selected from the group of silicon, aluminium, alkaline and earth alkaline metal oxides, and mixtures thereof, and optionally transition metal compounds and oxides and mixtures thereof.

11. The process according to any of the preceding claims, wherein the silica-containing raw material is mineral wool or mineral fibres, selected from the group of wastes and products of a process for producing mineral wool or mineral fibre products, spinning waste of such a process, unused fibres and unused wool, and recycled mineral wool and fibre products.

12. The process according to any of the preceding claims, comprising mixing together amorphous silica raw-material with aqueous alkanoic acid to provide an essentially homogeneous suspension of the raw-material in the aqueous alkanoic acid, and continuing the reaction between the silica raw-material and the alkanoic acid until a metastable silicate solution having a pH of at least 2.3 has been obtained.

13. The process according to any of the preceding claims, wherein the reaction between the silica-containing suspension and the acid is continued for not more than 4 hours.

14. The process according to any of the preceding claims, comprising filtering the acid silicate solution and recovering the filtrate, the filtrate being cooled to -10 to 15 °C.

15. The process according to any of the preceding claims, comprising recovering an acid silicate solution having a concentration of at least 1 % silicon and being stable at 10 to 12 °C for at least about 12 hours.

16. The process according to any of the preceding claims, wherein the gel time of the silicate solution is at least about 700 minutes at 20 °C, preferably at least about 800 minutes at 20 °C, in particular about 850 to 4,000 minutes at 20 °C.

## Patentansprüche

1. Verfahren zur Herstellung einer sauren Silikatlösung aus einem amorphen Silika-Rohmaterial durch das Auflösen des Silika-Rohmaterials in mindestens einer organischen Säure, umfassend
- einen ersten Schritt der Suspendierung des Silika-Rohmaterials in einer die Säure enthaltenden Flüssigkeit, zur Herstellung einer Silika-enthaltenden Suspension mit einem Trockenfeststoffgehalt von mindestens 10 % bezogen auf das Gewicht der Flüssigkeit, und
- einen zweiten Schritt der Umsetzung der Silika mit der Säure in der Suspension, zur Herstellung einer Silikatlösung mit einem Silikongehalt von mindestens 0,1 Gewichts-%,
wobei eine metastabile Silikatlösung mit einem pH-Wert von 2,0 bis 3,0 hergestellt wird.

2. Verfahren gemäß Anspruch 1, umfassend das Herstellen einer Silikatlösung mit einem Trockenfeststoffgehalt von mindestens 12%.

3. Verfahren gemäß Anspruch 1 oder 2, umfassend das Herstellen einer Silikatlösung mit einem Silikongehalt von mindestens 0,5 Gew.-%, insbesondere mindestens 1 Gew.-%.

4. Verfahren gemäß einem der Ansprüche 1 bis 3, wobei der erste und der zweite Schritt kontinuierlich durchgeführt werden.

5. Verfahren gemäß Anspruch 3, wobei der erste Schritt in einem ersten Rührgefäß mit einem kontinuierlich betriebenen Auslass zur Entnahme der Silika-enthaltenden Suspension durchgeführt wird, wobei die Suspension eine Oberfläche mit einer Höhe innerhalb des Gefäßes definiert, wobei die Höhe der Oberfläche überwacht wird und die Entnahme der gemischten Suspension derart durchgeführt wird, dass die Höhe der Oberfläche auf einer vorbestimmten Höhe innerhalb des Gefäßes gehalten wird.

6. Verfahren gemäß einem der vorhergehenden Ansprüche, umfassend das Herstellen einer Silikatlösung enthaltend Silika und Aluminium in einem Mol-Verhältnis von ungefähr 2 bis ungefähr 12, vorzugsweise von 2,5 bis 8, insbesondere von 3 bis 6.

7. Verfahren gemäß einem der vorhergehenden Ansprüche, wobei das Rohmaterial in mono-, di- oder tribasischen organischen Säuren, insbesondere Mono-, Di- oder Tri-carboxysäuren oder Hydroxysäuren ausgewählt aus der Gruppe der Alkansäuren mit 1 bis 6 Kohlenstoffatomen und aromatischen Mono- und Di-carboxysäuren mit 6 bis 8 Kohlenstoffatomen, und Gemischen davon.

8. Verfahren gemäß Anspruch 7, wobei das Rohmaterial in einem Gemisch aus Ameisensäure und einer oder mehreren organischen Säure(n) ausgewählt aus Milchsäure, Oxalsäure, Apfelsäure, Malonsäure, Weinsäure und Zitronensäure suspendiert wird.

9. Verfahren gemäß Anspruch 8, wobei ein Gemisch aus Ameisensäure und mindestens einer weiteren organischen Säure verwendet wird, wobei die Konzentration der Armeisensäure 85 bis 98 % beträgt und die Konzentration der weiteren Säure(n) ungefähr 2 bis 15 % beträgt, wobei sich die Prozentangaben aus der molaren Gesamtkonzentration der Säure berechnen.

10. Verfahren gemäß einem der vorhergehenden Ansprüche, wobei das Rohmaterial ein Fasermaterial ist, wobei das Material Oxide ausgewählt aus Silicium-, Aluminium-, Alkali- und Erdalkalimetalloxiden und Gemischen davon, und gegebenenfalls Übergangsmetallverbindungen und Oxide und Gemische davon umfasst.

11. Verfahren gemäß einem der vorhergehenden Ansprüche, wobei das Silika-enthaltende Rohmaterial Mineralwolle oder Mineralfasern ist, ausgewählt aus Abfällen und Produkten eines Verfahrens zur Herstellung von Mineralwolle oder Mineralfasern, Spinnabfall eines solchen Verfahrens, unbenutzte Fasern und unbenutzte Wolle, und wiederverwertete Mineralwolle und Faserprodukte.

12. Verfahren gemäß einem der vorhergehenden Ansprüche, umfassend das Vermischen des amorphen Silika-Rohmaterials mit wässriger Alkansäure zur Herstellung einer im wesentlichen homogenen Suspension des Rohmaterials, und Fortsetzen der Reaktion zwischen dem Silika-Rohmaterial und der Alkansäure bis eine metastabile Silikatlösung mit einem pH-Wert von mindestens 2,3 erhalten wird.

13. Verfahren gemäß einem der vorhergehenden Ansprüche, wobei die Reaktion zwischen der Silika-enthaltenden Suspension und der Säure nicht mehr als 4 Stunden fortgesetzt wird.

14. Verfahren gemäß einem der vorhergehenden Ansprüche, umfassend das Filtrieren der sauren Silikatlösung und Gewinnen des Filtrats, wobei das Filtrat auf -10 bis 15°C abgekühlt wird.

15. Verfahren gemäß einem der vorhergehenden Ansprüche, umfassend das Gewinnen einer sauren Silikatlösung mit einer Konzentration von mindestens 1 % Silicium, die bei 10 bis 12°C für mindestens 12 Stunden stabil ist.

16. Verfahren gemäß einem der vorhergehenden Ansprüche, wobei die Gelierzeit der Silikatlösung mindestens ungefähr 700 Minuten bei 20°C beträgt, vorzugsweise mindestens ungefähr 800 Minuten bei 20°C, insbesondere ungefähr 850 bis 4000 Minuten bei 20°C.

## Revendications

1. Procédé de production d'une solution de silicate acide à partir d'une matière première de silice amorphe par dissolution de la matière première de silice dans au moins un acide organique, comprenant
- une première étape de mise en suspension de la matière première de silice dans un liquide qui contient l'acide pour produire une suspension contenant de la silice ayant une teneur en matière sèche d'au moins 10 %, calculée par rapport au poids du liquide, et
- une seconde étape de réaction de la silice avec l'acide dans la suspension pour produire une solution de silicate ayant une teneur en silicium d'au moins 0,1 % en poids,
dans lequel une solution de silicate métastable est produite, ayant un pH de 2,0 à 3,0.

2. Procédé selon la revendication 1, comprenant la production d'une solution de silicate ayant une teneur en matière sèche d'au moins 12 %.

3. Procédé selon la revendication 1 ou 2, comprenant la production d'une solution de silicate ayant une teneur d'au moins 0,5 %, en particulier d'au moins 1 % en poids.

4. Procédé selon l'une quelconque des revendications 1 à 3, dans lequel les première et seconde étapes sont réalisées de manière continue.

5. Procédé selon la revendication 3, dans lequel la première étape est réalisée dans une première cuve agitée avec un refoulement actionné en continu pour le retrait de la suspension contenant de la silice, la suspension définissant une surface supérieure ayant un niveau au sein de la cuve, moyennant quoi le niveau de la surface supérieure est surveillé et le retrait de la suspension mélangée est réalisé de telle manière que le niveau de la surface supérieure est maintenu à une hauteur prédéterminée au sein de la cuve.

6. Procédé selon l'une quelconque des revendications précédentes, comprenant la production d'une solution de silicate contenant de la silice et de l'alumine dans un rapport molaire d'environ 2 à environ 12, de préférence de 2,5 à 8, en particulier de 3 à 6.

7. Procédé selon l'une quelconque des revendications précédentes, dans lequel la matière première est mise en suspension dans des acides organiques mono-, di- ou tri-basiques, par exemple des acides mono-, di- ou tri-carboxyliques ou des hydroxy acides choisis dans le groupe des acides alcanoïques comportant 1 à 6 atomes de carbone et des acides aromatiques mono- et di-carboxyliques comportant 6 à 8 atomes de carbone, et leurs mélanges.

8. Procédé selon la revendication 7, dans lequel la matière première est mise en suspension dans un mélange formé par de l'acide formique et un ou plusieurs acides organiques choisis dans le groupe constitué par l'acide lactique, l'acide oxalique, l'acide malique, l'acide malonique, l'acide tartrique et l'acide citrique.

9. Procédé selon la revendication 8, dans lequel un mélange d'acide formique et d'au moins un autre acide organique est utilisé, la concentration de l'acide formique étant de 85 à 98 % et la concentration de l'acide ou des autres acides est d'environ 2 à 15 %, les pourcentages étant calculés à partir de la concentration molaire totale de l'acide.

10. Procédé selon l'une quelconque des revendications précédentes, dans lequel la matière première est une matière fibreuse, qui comprend des oxydes choisis dans le groupe des oxydes de silicium, d'aluminium, de métaux alcalins et alcalino-terreux, et de leurs mélanges, et facultativement des composés et oxydes de métal de transition et leurs mélanges.

11. Procédé selon l'une quelconque des revendications précédentes, dans lequel la matière première contenant de la silice est constituée de laine minérale ou de fibres minérales, choisies dans le groupe des déchets et produits d'un procédé permettant de produire des produits de laine minérale ou de fibres minérales, des déchets de filature d'un tel procédé, des fibres inutilisées ou de laine inutilisée, et des produits recyclés de laine et de fibres minérales.

12. Procédé selon l'une quelconque des revendications précédentes, comprenant le mélange conjoint de matière première de silice amorphe et d'acide alcanoïque aqueux pour former une suspension essentiellement homogène de la matière première dans l'acide alcanoïque aqueux, et la poursuite de la réaction entre la matière première de silice et l'acide alcanoïque jusqu'à ce qu'une solution de silicate métastable ayant un pH d'au moins 2,3 ait été obtenue.

13. Procédé selon l'une quelconque des revendications précédentes, dans lequel la réaction entre la suspension contenant de la silice et l'acide est poursuivie pendant pas plus de 4 heures.

14. Procédé selon l'une quelconque des revendications précédentes, comprenant la filtration de la solution de silicate acide et la récupération du filtrat, le filtrat étant refroidi à -10 à 15°C.

15. Procédé selon l'une quelconque des revendications précédentes, comprenant la récupération d'une solution de silicate acide ayant une concentration d'au moins 1 % de silicium et étant stable à 10 à 12°C pendant au moins environ 12 heures.

16. Procédé selon l'une quelconque des revendications précédentes, dans lequel le temps de gélification de la solution de silicate est d'au moins environ 700 minutes à 20°C, de préférence d'au moins environ 800 minutes à 20°C, en particulier d'environ 850 à 4 000 minutes à 20°C.
